# EUROPEAN PATENT APPLICATION

(11) **EP 3 267 373 A1**
(43) Date of publication of application: **10.01.2018**
(21) Application number: 16178735.3
(22) Date of filing: 08.07.2016
(51) Int. Cl.: G06Q 10/06, G06Q 40/02

(54) **INCOME MARGIN DETERMINATION**

(71) Applicant: Klarna AB, 111 34 Stockholm (SE)
(72) Inventor: CASSEL, Kristoffer, 111 34 STOCKHOLM (SE)
(74) Representative: Keijser Bergöö, Malin Katarina

(57) **Abstract**

A computer implemented method of determining an income margin for a user of an online transaction system comprising a user device and a processor is disclosed. In one or more embodiments, the method is performed by the processor and comprises: obtaining user identifying data and determining a unique user identifier identifying the user based on the obtained user identifying data; obtaining financial data about the user; determining an income estimate Xₑ and an expense estimate Yₑ for the user, based on the obtained financial data; determining an income margin estimate Zₑ as the difference between the income estimate Xₑ and the expense estimate Yₑ, so that Zₑ Xₑ - Yₑ ; obtaining a proposed credit limit Cₚ for the user; calculating a proposed credit cost C_{c} based on said proposed credit limit Cₚ; and determining a verification need Vₑ based on a comparison between the income margin estimate Zₑ and the proposed credit cost C_{c}. If the verification need Vₑ is beyond a predetermined threshold, income margin verification input may be requested from the user by: selecting at least one financial statement template from a number of predetermined financial statement templates; calculating at least one value for the financial statement template; generating at least one financial statement by combining the selected financial statement template with the calculated at least one value; presenting to the user, via the user device, the at least one financial statement; and requesting, via the user device, income margin verification input from the user. The financial data about the user may be obtained by sending the unique user identifier to at least one data source, wherein the at least one data source comprises at least one internal data source and/or at least one external data source, and receiving financial data related to the user from the at least one data source based on the unique user identifier.

## Description

### TECHNICAL FIELD

The present disclosure relates generally to determining an income margin for a user of an online transaction system.

### BACKGROUND

When purchasing goods or services, a purchaser may in an online transaction system be given the option to apply for credit. In order to decide whether to allow a credit for a specific applicant, the credit issuing company needs to determine the creditworthiness of the applicant. This may be done by obtaining information from databases recording e.g. payment injunctions and records of non-payment, e.g. by consulting a credit rating agency. An online transaction method in which a credit determination for a user is made based on information such as transaction specifics, goods purchased, user details, merchant, the order price, payment plan, user income, payment remarks, user payment history and recent user purchase activity is described in WO 2013/131971.

In some countries, the law also requires a credit provider to assess the applicant's ability to meet repayments under the proposed credit agreement in a sustainable manner without the applicant incurring financial difficulties or experiencing significant adverse consequences (affordability assessment), based on information provided by the applicant. This determination generally requires the applicant to provide large amounts of information about income, expenses and other financial circumstances.

There is a need to provide an improved way of determining an income margin.

### SUMMARY

The above described problem may be addressed by a computer implemented method of determining an income margin for a user of an online transaction system comprising a user device and a processor. In one or more embodiments, the method is performed by the processor and comprises: obtaining user identifying data and determining a unique user identifier identifying the user based on the obtained user identifying data; obtaining financial data about the user; determining an income estimate Xₑ and an expense estimate Yₑ for the user, based on the obtained financial data; determining an income margin estimate Zₑ as the difference between the income estimate Xₑ and the expense estimate Yₑ, so that Zₑ + Xₑ -Yₑ; obtaining a proposed credit limit Cₚ for the user; calculating a proposed credit cost C_{c} based on the proposed credit limit Cₚ; and determining a verification need Vₑ based on a comparison between the income margin estimate Zₑ and the proposed credit cost C_{c}. If the verification need Vₑ is beyond a predetermined threshold, income margin verification input may be requested from the user by: selecting at least one financial statement template from a number of predetermined financial statement templates; calculating at least one value for the financial statement template; generating at least one financial statement by combining the selected financial statement template with the calculated at least one value; presenting to the user, via the user device, the at least one financial statement; and requesting, via the user device, income margin verification input from the user. The financial data about the user may be obtained by sending the unique user identifier to at least one data source, wherein the at least one data source comprises at least one internal data source and/or at least one external data source, and receiving financial data related to the user from the at least one data source based on the unique user identifier.

In one or more embodiments, the method further comprises the user device receiving income margin verification input from the user, and transferring this income margin verification input to the processor in the form of an input signal, wherein the input signal indicates either confirmation, rejection or amendment of the presented financial statement; and the processor updating the income margin estimate Zₑ, based on the input signal, to an updated income margin estimate Zᵤ, by: updating the income estimate Xₑ to an updated income estimate Xᵤ; updating the expense estimate Yₑ to an updated expense estimate Yᵤ; and updating the income margin estimate Zₑ to an updated income margin estimate Zᵤ, where Zᵤ = Xᵤ - Yᵤ.

In one or more embodiments, the method further comprises the processor verifying the updated income margin estimate Zᵤ by: determining whether the input signal confirms the updated income estimate Xᵤ to a verified income estimate Xᵥ; determining whether the input signal confirms the updated expense estimate Yᵤ to a verified expense estimate Yᵥ; if both a verified income estimate Xᵥ and a verified expense estimate Yᵥ can be determined, determining a verified income margin Zᵥ as the difference between the verified income estimate Xᵥ and the verified expense estimate Yᵥ, so that Zᵥ = Xᵥ - Yᵥ; and if either a verified income estimate Xᵥ or a verified expense estimate Yᵥ cannot be determined, determining an updated verification need Vᵤ based on the updated income margin estimate Zᵤ, requesting further income margin verification input from the user, and updating the estimates based on the further income margin verification input until a verified income margin Zᵥ can be determined.

In one or more embodiments, the method further comprises the processor approving or rejecting the proposed credit limit Cₚ by determining whether the verified income margin Zᵥ exceeds the proposed credit cost C_{c} with at least a predetermined buffer amount B, and: approving the proposed credit limit Cₚ if the verified income margin Zᵥ exceeds the proposed credit cost C_{c} with at least the predetermined buffer amount B; and rejecting the proposed credit limit Cₚ if the verified income margin Zᵥ does not exceed the proposed credit cost C_{c} with at least the predetermined buffer amount B.

In one or more embodiments, the method further comprises the processor calculating an updated proposed credit cost Cᵤ, which the verified income margin Zᵥ exceeds by at least the predetermined buffer amount B, and calculating a new proposed credit limit Cₚ based on the updated proposed credit cost Cᵤ.

In one or more embodiments, the method further comprises that the proposed credit limit Cₚ is obtained by being calculated by the processor based on the amount of money required for a transaction requested by the user via the user device.

In one or more embodiments, the method further comprises that the proposed credit limit Cₚ is obtained by being calculated by the processor based on the determined income margin estimate Zₑ.

The above described problem may further be addressed by a system for determining an income margin for a user of an online transaction system, the system comprising a user device and a processor, communicatively coupled to the user device and to at least one data source, wherein the at least one data source comprises at least one internal data source and/or at least one external data source. In one or more embodiments, the processor is configured to: obtain user identifying data and determine a unique user identifier identifying the user based on the obtained user identifying data; obtain financial data about the user; determine an income estimate Xₑ and an expense estimate Yₑ for the user, based on the obtained financial data; determine an income margin estimate Zₑ as the difference between the income estimate Xₑ and the expense estimate Yₑ, so that Zₑ = Xₑ - Yₑ; obtain a proposed credit limit Cₚ for the user; calculate a proposed credit cost C_{c} based on said proposed credit limit Cₚ; and determine a verification need Vₑ based on a comparison between the income margin estimate Zₑ and the proposed credit cost C_{c}. If the verification need Vₑ is beyond a predetermined threshold, the processor may further be configured to request income margin verification input from the user by: selecting at least one financial statement template from a number of predetermined financial statement templates; calculating at least one value for the financial statement template; generating at least one financial statement by combining the selected financial statement template with the calculated at least one value; presenting the at least one financial statement to the user, via the user device; and requesting income margin verification input from the user, via the user device. The financial data about the user may be obtained by sending the unique user identifier to at least one data source, and receiving financial data related to the user from the at least one data source based on the unique user identifier.

The above described problem may further be addressed by a non-transitory machine-readable medium on which is stored machine-readable code which, when executed by a processor, controls the processor to perform the method steps described above.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Figure 1 shows a schematic view of a system for determining an income margin for a user of an online transaction system, in accordance with one or more embodiments described herein.
Fig. 2 shows a flow chart of a computer implemented method of determining an income margin for a user of an online transaction system, in accordance with one or more embodiments described herein.
Fig. 3 shows a flow diagram of a computer implemented method of determining an income margin for a user of an online transaction system, performed using the system of Fig. 1, in accordance with one or more embodiments described herein.

Embodiments of the present disclosure and their advantages are best understood by referring to the detailed description that follows. It should be appreciated that like reference numerals are used to identify like elements illustrated in one or more of the figures.

### DETAILED DESCRIPTION

### Introduction

The present disclosure relates generally to determining an income margin for a user of an online transaction system, with the purpose of approving or rejecting a proposed credit limit based on the affordability for the user of the proposed credit. The online transaction system may be used for purchasing goods/services online, or for purchasing goods/services in a physical store, but signing up for credit online in the store (e.g. via a smartphone or tablet computer).

The term credit limit relates to the available credit space. This may comprise a one-time credit as well as a revolving credit, and the proposed credit cost may be calculated in different ways depending on the type of credit. The proposed credit cost may relate to a specific time period, such as e.g. a month, three months, six months, or a year, and is preferably compared to the income margin estimate for the same or at least a similar time period.

The term affordability relates to whether the user can afford the proposed credit. In order to determine affordability, the total income is preferably related to the total amount of expenses, and this is related to the size of the proposed credit limit. The estimation of the user's total income in the affordability determination may also involve the user's assets.

The term creditworthiness relates to whether a company issuing a credit can expect to be paid. This has a relation to the affordability - a customer who cannot afford to buy something will of course have a problem paying for the credit - but is also influenced by other factors. There are people with very low income margins who will always pay in time, and there are people with large income margins who still do not pay for their credits. Historical behavior is therefore an important factor in determining creditworthiness.

One or more embodiments of the present disclosure provides a system, a method and a non-transitory machine-readable medium on which is stored machine-readable code which, when executed by a processor, controls the processor to determine an income margin for a user of an online transaction system. In one or more embodiments, the system, method and non-transitory machine-readable medium provide financial statements which the user can confirm, amend or reject.

The processor may in embodiments comprise any type of processing device. The processor may in embodiments comprise several different processors which together perform the claimed functions. In the same way, the memory may in embodiments comprise several different storage media which together perform the claimed functions.

System and method embodiments of the disclosed solution are presented in more detail in connection with the figures.

### System architecture

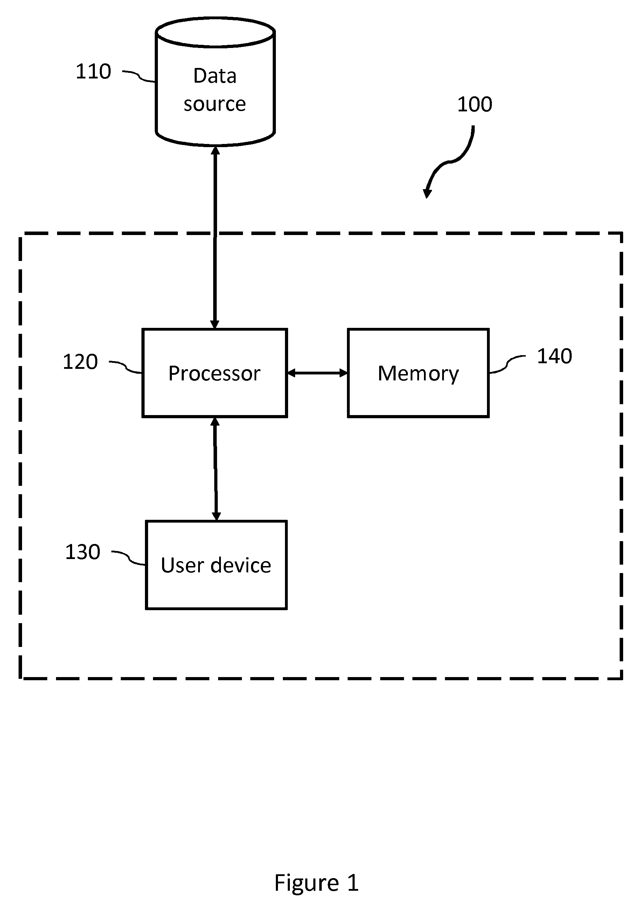

Figure 1 shows a schematic view of a system for determining an income margin for a user of an online transaction system.

In one or more embodiments, the system 100 comprises a user device 130 configured to receive input from a user and present information to the user. The user device 130 may e.g. be a mobile phone or a computer, comprising a display on which a user interface is displayed via e.g. an app or a web site.

In one or more embodiments, the system 100 further comprises a processor 120, communicatively coupled to the user device 130. In embodiments, the processor 120 is configured to obtain user identifying data and determine a unique user identifier based on the obtained user identifying data. In embodiments, user identifying data is obtained as an input signal from the user device 130, e.g. as a part of a request to initiate a transaction from a user. In embodiments, user identifying data is obtained from other sources, e.g. as described in WO 2013/131971 (hereby incorporated by reference in its entirety).

In one or more embodiments, the processor 120 is communicatively coupled also to at least one data source 110. The at least one data source 110 may comprise at least one internal data source and/or at least one external data source. External data sources may e.g. contain various types of statistic information regarding average income, house prices, cost of living etc. based on e.g. address information or demographics. External data sources may also contain information specific for the user, such as information about registered income, employment status, assets, debts, expenses, number of dependents, payment injunctions, records of non-payment, etc. Internal data sources may e.g. contain previously obtained data and historical behavior, both statistical behavior based on e.g. address information or demographics and historical behavior for the specific user.

In one or more embodiments, the processor 120 is configured to obtain financial data about the user by sending the unique user identifier to the at least one data source 110, and receiving financial data from the at least one data source 110 based on the unique user identifier. The data may be received as pushed data from the at least one data source 110, or retrieved as pulled data in response to a request, e.g. in the form of a control signal. In embodiments, the processor 120 is configured to in other ways retrieve financial data related to the user from the at least one data source 110 based on the user identifier.

In one or more embodiments, the financial data may comprise information relating to registered income, employment status, assets, debts, expenses, number of dependents, payment injunctions, records of non-payment, etc. Income information may be obtained from sources of statistical data, for example by retrieving or calculating a mean or median income for persons living in the post code area of the identified user. Income information may in different embodiments be information representing an income value, an interval of income values within which a specific sought after income value is comprised, or a threshold value that a specific sought after income value exceeds or falls below. Income information may also include other types of assets. Debt information may e.g. be obtained by retrieving information about previously granted credits.

In one or more embodiments, the processor 120 is configured to determine an income estimate Xₑ and an expense estimate Yₑ for the user, based on the obtained financial data, and further to determine an income margin estimate Zₑ as the difference between the income estimate Xₑ and the expense estimate Yₑ, so that Zₑ = Xₑ - Yₑ. The income margin estimate Zₑ represents the amount of income or other assets that remains after all the necessary expenses have been paid, and is calculated for a selected time period, e.g. monthly.

In one or more embodiments, the processor 120 is configured to obtain a proposed credit limit Cₚ for the user, and calculate a proposed credit cost C_{c} based on the proposed credit limit Cₚ. The proposed credit cost C_{c} may relate to a specific time period, such as e.g. a month, three months, six months, or a year, and may e.g. be calculated as based on a typical interest rate for the proposed credit.

The proposed credit limit Cₚ may e.g. be obtained from the user device 130 or from the at least one data source 110, or calculated based on the determined income margin estimate Zₑ. It may also be input to the system in other ways.

If the proposed credit limit Cₚ is obtained independently of the determined income margin estimate Zₑ, it may be obtained at any point before the determination of the verification need Vₑ. If the proposed credit limit Cₚ is calculated based on the amount of money required for a transaction, it may even be obtained before the unique user identifier has been determined. The proposed credit limit Cₚ may also be calculated based on preliminary credit information data about the specific user, or be a proposed increase of an already granted credit limit. However, if the proposed credit limit Cₚ is obtained by being calculated based on the determined income margin estimate Zₑ (preferably via first calculating a proposed credit cost C_{c} corresponding to the determined income margin estimate Zₑ), the income margin estimate Zₑ must of course be determined first.

In one or more embodiments, the processor 120 is configured to determine a verification need Vₑ based on a comparison between the proposed credit cost C_{c} and the income margin estimate Zₑ. The proposed credit cost C_{c} is preferably compared to the income margin estimate Zₑ for a similar time period.

Typically, if the proposed credit cost C_{c} is larger than the income margin estimate Zₑ, there is a need for verifying the income margin estimate Zₑ. Even if the proposed credit cost C_{c} is not larger than the income margin estimate Zₑ, there may be a need for verifying the income margin estimate Zₑ if the proposed credit cost C_{c} is close to the income margin estimate Zₑ.

In one or more embodiments, the processor 120 is configured to determine whether the verification need Vₑ is beyond a predetermined threshold. The verification need Vₑ may be beyond the predetermined threshold by exceeding it or by falling below it, depending on how the verification need Vₑ is calculated. If the processor 120 determines that the verification need Vₑ is beyond a predetermined threshold, the processor 120 is configured to request income margin verification input from the user by generating financial statements to be confirmed or rejected by the user.

The financial statements may be formulated as statements to be confirmed/rejected, or as statement questions to be answered yes/no. Examples of financial statements in the form of statements to be confirmed/rejected may be e.g.
*"My annual salary exceeds £22,000"*
*"I confirm that I am permanently employed and that my annual salary exceeds £22,000, my monthly mortgage payment or rent is less than 30% of my monthly net income, and that I have no more than 1 dependent"*

Examples of financial statements in the form of statement questions to be answered yes/no may be e.g.
*"Are you permanently employed?"*
*"Does your annual salary exceed £22,000?"*
*"Is your monthly mortgage payment or rent less than 30% of your monthly net income?"*

In order to generate financial statements, the processor 120 is configured to first select at least one financial statement template from a number of predetermined financial statement templates, based on the types of financial data obtained. A number of financial statement templates may e.g. be stored in and retrieved from an internal system memory 140, which is also communicatively coupled to the processor 120. Depending on the types of financial data obtained, different financial statement templates may be selected. In one or more embodiments, the financial data, or information about the financial data, is transferred from the processor 120 to the memory 140, and at least one financial statement template is retrieved or received in the processor 120 based on the types of financial data.

If the financial data does not comprise user specific income information, the processor 120 may be configured to select one or more financial statement templates aimed at verifying the income estimate Xₑ. If the financial data does not comprise user specific or in other ways reasonably reliable information regarding expenses such as mortgages, the processor 120 may be configured to select one or more financial statement templates aimed at verifying the expense estimate Yₑ. The processor 120 may also be configured to select financial statement templates which verify both income and expenses.

If the selected financial statement contains a value, the processor 120 may be configured to calculate this value. The processor 120 may of course calculate the value as a proper estimate, a "best guess" of the actual value, based on the obtained financial data. However, it is often not necessary to actually verify the real value of e.g. the annual salary of a user. The processor 120 may in this case be configured to verify a much lower annual salary, as long as a large enough income margin estimate Zₑ can be verified. The purpose of a financial statement is to verify the affordability of the proposed credit limit Cₚ for the user, so it is not always necessary or even desirable for the value to be an accurate estimate. The processor 120 may thus e.g. calculate the values for the financial statements based on the proposed credit limit Cₚ instead of based on the obtained financial data, or based on a combination of the proposed credit limit Cₚ and the obtained financial data.

The processor 120 is then configured to generate at least one financial statement by combining the selected financial statement template with the calculated at least one value.

In one or more embodiments, the processor 120 is configured to send control signals adapted to trigger display of data dynamically dependent on the dynamically generated financial statements to the user device 130. In one or more embodiments, the user device may 130 be configured to receive data, for example image data and/or graphical data, for conveyance, for example display, via the processor 120. The user device 130 may e.g. be configured to receive data in response to a control signal received from the processor 120. The user device 130 may comprise a display on which a user interface (which may be a graphical user interface) is displayed via e.g. an app or a web site, and the processor 120 may be configured to add the at least one financial statement, in the form of for example text, graphics, or audio, to the user interface. In embodiments, the user interface is a graphical user interface and the user device 130 is configured to convey the graphical user interface by displaying image data and/or graphical data of the graphical user interface.

The processor 120 may for example be a general data processor, or other circuit or integrated circuit capable of executing instructions to perform various processing operations. The processor 120 may in embodiments comprise several different processors which together perform the claimed functions. The processor 120 may in embodiments comprise any type of processing device.

In one or more embodiments, the user device 130 is configured to receive input from the user and send an input signal indicating either confirmation, rejection or amendment of a presented financial statement to the processor 120. The processor 120 may be configured to receive the input signal from the user device 130, and update the income margin estimate Zₑ, based on the input signal, to an updated income margin estimate Zᵤ, by updating the income estimate Xₑ to an updated income estimate Xᵤ, updating the expense estimate Yₑ to an updated expense estimate Yᵤ, and updating the income margin estimate Zₑ to an updated income margin estimate Zᵤ, where Zᵤ = Xᵤ - Yᵤ.

In embodiments, if the input signal indicates that the user confirms all financial statements presented for income verification, the processor 120 confirms the income estimate Xᵤ to a verified income estimate Xᵥ, and if the input signal indicates that the user confirms all financial statements presented for expense verification, the processor 120 confirms the expense estimate Yᵤ to a verified expense estimate Yᵥ. However, if the input signal indicates that the user rejects some statements, or elects to amend the values in some statements, the processor 120 may update the income estimate Xᵤ so that it differs from the income estimate Xₑ, and/or update the expense estimate Yᵤ so that it differs from the expense estimate Yₑ. No verified income/expense estimates will be determined based on rejected statements, but if the use elects to amend values, verified income/expense estimates may be based on statements which the user has amended and then confirmed. In this case, the processor 120 may determine the updated income estimate Xᵤ and/or the updated expense estimate Yᵤ based on the amended values.

When the processor 120 has determined both a verified income estimate Xᵥ and a verified expense estimate Yᵥ, the processor 120 may determine a verified income margin Zᵥ as the difference between the verified income estimate Xᵥ and the verified expense estimate Yᵥ, so that Zᵥ = Xᵥ - Yᵥ.

If either a verified income estimate Xᵥ or a verified expense estimate Yᵥ cannot be determined, e.g. because the user has rejected statements, the processor 120 may determine an updated verification need Vᵤ based on the updated income margin estimate Zᵤ. In this case, the processor 120 may request further income margin verification input from the user and update the estimates based on this input until a verified income margin Zᵥ can be determined. The requesting of further income margin verification input from the user may be done by generating at least one new financial statement to be confirmed or rejected by the user, in the way described above. The new financial statement may be generated with another value, and/or using another financial statement template.

When a verified income margin Zᵥ has been determined, the processor 120 may determine whether the verified income margin Zᵥ exceeds the proposed credit cost C_{c} with at least a predetermined buffer amount B. The processor 120 may then approve the proposed credit limit Cₚ if the verified income margin Zᵥ exceeds the proposed credit cost C_{c} with at least the predetermined buffer amount B, and reject the proposed credit limit Cₚ if the verified income margin Zᵥ does not exceed the proposed credit cost C_{c} with at least the predetermined buffer amount B. The predetermined buffer amount B may be any amount considered necessary to ensure that the user has an economical buffer, but may also be set to 0 if the user is not considered to need any economical buffer, e.g. due to the user's assets. Information about the user's assets may thus be used for determining the predetermined buffer amount B.

In embodiments, the processor 120 may calculate an updated proposed credit cost Cᵤ which the verified income margin Zᵥ exceeds by at least the predetermined buffer amount B, and based on the updated proposed credit cost Cᵤ calculate a new proposed credit limit Cₚ.

The processor 120 may approve the proposed credit limit Cₚ to an approved credit limit Cₐ if the above described conditions for approval have been met.

The user device 130 is typically configured to receive user input and to generate control signals in response to the received user input. The user device 130 may be integrated in, connected to or communicatively coupled to the online transaction system. The user device 130 may for instance be configured to receive user input in connection with a confirmation, rejection or amendment of a presented financial statement, and generate control signals in response to the received user input, to trigger display of an image or manipulation of image data being displayed, wherein the manipulations may be temporary or permanent. A user device 130 may for example comprise a selection of a keyboard, a computer mouse, one or more buttons, touch functionality, a joystick, and/or any other suitable input device. In one or more embodiments, the user device 130 is configured to receive user input via a graphical user interface, with which the user interacts using the input device functionality. In some embodiments, the processor 120 may be configured to receive a control signal from the user device 130 and to process image data that is being displayed, or in other words manipulate a displayed image, in response to the received control signal.

The processor 120 may further be configured to perform the method steps of any or all of the embodiments presented herein.

### Method embodiments

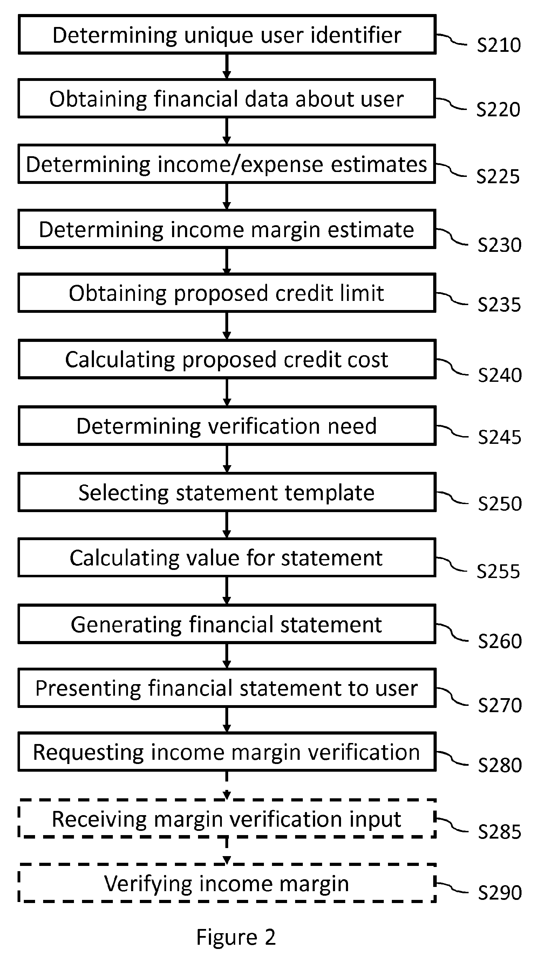

Fig. 2 shows a flow chart of a computer implemented method of determining an income margin for a user of an online transaction system comprising a user device 130 and a processor 120. In accordance with one or more embodiments, the method is performed by the processor 120 and comprises the following steps (not necessarily in the order listed):
In step S210: Obtaining user identifying data and determining a unique user identifier identifying the user based on the obtained user identifying data.
In step S220: Obtaining financial data about the user by:
   - sending the unique user identifier to at least one data source 110, wherein the at least one data source 110 comprises at least one external data source and/or at least one internal data source; and
   - receiving financial data related to the user from the at least one data source 110 based on the unique user identifier.
In step S225: Determining an income estimate Xₑ and an expense estimate Yₑ for the user, based on the obtained financial data.
In step S230: Determining an income margin estimate Zₑ as the difference between the income estimate Xₑ and the expense estimate Yₑ, so that Zₑ = Xₑ - Yₑ.
In step S235: Obtaining a proposed credit limit Cₚ for the user.
In step S240: Calculating a proposed credit cost C_{c} based on the proposed credit limit Cₚ.
In step S245: Determining a verification need Vₑ based on a comparison between the income margin estimate Zₑ and the proposed credit cost C_{c}.

If the determined verification need Vₑ is beyond a predetermined threshold, the method further comprises requesting income margin verification input from the user by:
In step S250: Selecting at least one financial statement template from a number of predetermined financial statement templates.
In step S255: Calculating at least one value for the financial statement template.
In step S260: Generating at least one financial statement by combining the selected financial statement template with the calculated at least one value.
In step S270: Presenting the at least one financial statement to the user.
In step S280: Requesting income margin verification input from the user.

The steps of the method do not necessarily have to be effected in the order listed. The proposed credit limit Cₚ for the user may e.g. be obtained, and the proposed credit cost C_{c} calculated, at any point before the determination of the verification need Vₑ.

In one or more embodiments, the method may further comprise:
In step 285: Receiving income margin verification input from the user in the form of an input signal, wherein the input signal indicates either confirmation, rejection or amendment of the presented financial statement. In embodiments, the input is received by the processor 120 in the form of an input signal from the user device 130. In embodiments, the processor 120 updates the income margin estimate Zₑ, based on the input signal, to an updated income margin estimate Zᵤ, by updating the income estimate Xₑ to an updated income estimate Xᵤ, updating the expense estimate Yₑ to an updated expense estimate Yᵤ, and updating the income margin estimate Zₑ to an updated income margin estimate Zᵤ, where Zᵤ = Xᵤ - Yᵤ.

In one or more embodiments, the method may further comprise:
In step 290: Verifying the income margin Z by: determining whether the input signal confirms the updated income estimate Xᵤ to a verified income estimate Xᵥ; determining whether the input signal confirms the updated expense estimate Yᵤ to a verified expense estimate Yᵥ; if both a verified income estimate Xᵥ and a verified expense estimate Yᵥ can be determined, determining a verified income margin Zᵥ as the difference between the verified income estimate Xᵥ and the verified expense estimate Yᵥ, so that Zᵥ = Xᵥ - Yᵥ; and if either a verified income estimate Xᵥ or a verified expense estimate Yᵥ cannot be determined, determining an updated verification need Vᵤ based on the updated income margin estimate Zᵤ, requesting further income margin verification input from the user, and updating the estimates based on the further income margin verification input until a verified income margin Zᵥ can be determined.

In one or more embodiments, the method may further comprise approving or rejecting the proposed credit limit Cₚ by determining whether the verified income margin Zᵥ exceeds the proposed credit cost C_{c} with at least a predetermined buffer amount B, and: approving the proposed credit limit Cₚ if the verified income margin Zᵥ exceeds the proposed credit cost C_{c} with at least the predetermined buffer amount B; and rejecting the proposed credit limit Cₚ if the verified income margin Zᵥ does not exceed the proposed credit cost C_{c} with at least the predetermined buffer amount B. The predetermined buffer amount B may be any amount considered necessary to ensure that the user has an economical buffer, but may also be set to 0 if the user is not considered to need any economical buffer, e.g. due to the user's assets. Information about the user's assets may thus be used for determining the predetermined buffer amount B.

In one or more embodiments, the method may further comprise calculating an updated proposed credit cost Cᵤ, which the verified income margin Zᵥ exceeds by at least the predetermined buffer amount B, and based on the updated proposed credit cost Cᵤ calculate a new proposed credit limit Cₚ.

The proposed credit limit Cₚ may be approved to an approved credit limit Cₐ if the above described conditions for approval have been met.

In one or more embodiments, the proposed credit limit Cₚ is obtained by being calculated based on the amount of money required for a transaction requested by the user.

In one or more embodiments, the proposed credit limit Cₚ is obtained by being calculated based on the determined income margin estimate Zₑ.

The processor 120 may be configured to perform any or all of the above described method embodiments.

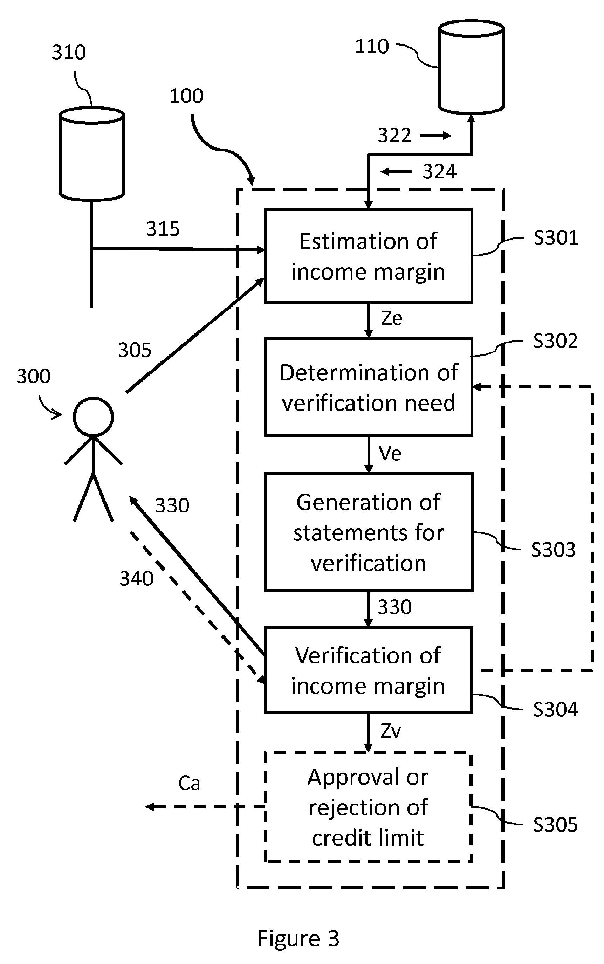

Fig. 3 shows a flow diagram of a computer implemented method of determining an income margin for a user of an online transaction system, performed using the system of Fig. 1 (indicated using a dashed line), in accordance with one or more embodiments. Figure 3 shows method steps S301-S305 performed by the online transaction system 100 according to one or more embodiments, and furthermore some of the input required to perform the method steps according to embodiments, as well as possible output produced by the system.

The estimation of step S301 corresponds to steps S210 to S240 of figure 2. The sub steps of step S301 are presented below. The order of the sub steps may be altered without departing from the claimed method.

In one or more embodiments, step S301 comprises determining a unique user identifier 322 identifying the user based on obtained user identifying data 315. User identifying data 315 may be obtained from the user 300 interacting with the system 100, e.g. as a part of a request 305 to initiate a transaction, and/or obtained from internal or external data storage 310.

Step S301 further comprises obtaining financial data about the user. The determined unique user identifier 322 is sent to at least one data source 110, comprising at least one external data source and/or at least one internal data source. External data sources may e.g. contain various types of statistic information regarding average income, house prices, cost of living etc. based on e.g. address information or demographics. External data sources may also contain information specific for the user, such as information about registered income, employment status, assets, debts, expenses, number of dependents, payment injunctions, records of non-payment, etc. Internal data sources may e.g. contain previously obtained data and historical behavior, both statistical behavior based on e.g. address information or demographics and historical behavior for the specific user. Based on the sent unique user identifier 322, the system 100 receives, from the at least one data source 110, financial data 324. The financial data 324 may e.g. be received as pushed data from the at least one data source 110, or retrieved as pulled data in response to a request e.g. in the form of a control signal. Financial data 324 which has been obtained for a specific user from an external data source may be stored in an internal data source for future retrieval.

Step S301 further comprises determining an income estimate Xₑ and an expense estimate Yₑ for the user, based on the obtained financial data 324.

In embodiments, the income estimate Xₑ is an estimate of the user's total income, and may also include other assets. If the financial data 324 obtained from the at least one data source 110 comprises user specific income information, the income estimate Xₑ may be quite reliable. However, it is often not possible to obtain user specific income information, and in that case it is possible to estimate the user's income based on e.g. statistical data. It may e.g. be possible to obtain financial data 324 in the form of statistical information about the mean or median income for persons living in the post code area of the user and/or belonging to the same age group or education level of the user from the at least one data source 110, and based on this determine an income estimate Xₑ. Such an income estimate Xₑ will of course be less reliable than user specific income information.

In embodiments, the expense estimate Yₑ is an estimate of the user's total cost of living. This may comprise e.g. housing expenses, food expenses and clothing expenses for the user and any dependents, such as children. This may also comprise expenses for any current credits, mortgages or other debts. While it may be possible to obtain financial data 324 comprising user specific information relating to number of dependents, current credits, mortgages and debts from the at least one data source 110, user specific financial data 324 for expenses such as housing expenses, food expenses and clothing expenses is generally difficult to obtain. However, it may be possible to obtain financial information 324 in the form of statistical information and/or template information regarding such expenses from the at least one data source 110, based on information such as the type of housing and the number of dependents. Based on the obtained financial data 324, an expense estimate Yₑ is determined.

Step S301 further comprises determining an income margin estimate Zₑ as the difference between the income estimate Xₑ and the expense estimate Yₑ, so that Zₑ = Xₑ - Yₑ. The income margin estimate Zₑ represents the amount of income that remains after all the necessary expenses have been paid.

Step S301 further comprises obtaining a proposed credit limit Cₚ for the user, and calculating a proposed credit cost C_{c} based on the proposed credit limit Cₚ. The proposed credit cost C_{c} may relate to a specific time period, such as e.g. a month, three months, six months, or a year, and may e.g. be calculated as based on a typical interest rate for the proposed credit.

In embodiments, the proposed credit limit Cₚ is obtained by being calculated based on the amount of money required for a transaction requested by the user. The proposed credit limit Cₚ may in that case e.g. be set to the price of the products to be bought in the transaction. This information may be a part of the request 305, or obtained in other ways. For example, if the transaction request 305 is made in a user interface where information about goods to be purchased is displayed, information from the user interface about the amount of money required for the transaction may be sent together with the request 305 from the user device 130.

In embodiments, the proposed credit limit Cₚ is obtained by being calculated based on the determined income margin estimate Zₑ. The proposed credit cost C_{c} may in this case e.g. be calculated so that it exceeds the determined income margin estimate Zₑ with at least a predetermined buffer amount B. The predetermined buffer amount B may be any amount considered necessary to ensure that the user has an economical buffer, but may also be set to 0 if the user is not considered to need any economical buffer.

If the proposed credit limit Cₚ is obtained independently of the determined income margin estimate Zₑ, it may be obtained at any point before the determination of the verification need Vₑ. If the proposed credit limit Cₚ is calculated based on the amount of money required for a transaction, it may even be obtained before the unique user identifier has been determined. The proposed credit limit Cₚ may also be calculated based on preliminary credit information data about the specific user, or be a proposed increase of an already granted credit limit. However, if the proposed credit limit Cₚ is obtained by being calculated based on the determined income margin estimate Zₑ (e.g. via first calculating a proposed credit cost C_{c} corresponding to the determined income margin estimate Zₑ), the income margin estimate Zₑ must of course be determined first.

Step S302 comprises determining a verification need Vₑ based on a comparison between the income margin estimate Zₑ and the proposed credit cost C_{c}. The proposed credit cost C_{c} is preferably compared to the income margin estimate Zₑ for a similar time period, such as e.g. monthly or yearly. Typically, if the proposed credit cost C_{c} is larger than the income margin estimate Zₑ, there is a need for verifying the income margin estimate Zₑ. Even if the proposed credit cost C_{c} is not larger than the income margin estimate Zₑ, there may be a need for verifying the income margin estimate Zₑ if the proposed credit cost C_{c} is close to the income margin estimate Zₑ. Step S302 thus corresponds to step S245 of figure 2.

Step S303 comprises determining whether the verification need Vₑ is beyond a predetermined threshold. One way of calculating the verification need Vₑ is to divide the proposed credit cost C_{c} with the income margin estimate Zₑ. If the proposed credit cost C_{c} is larger than the income margin estimate Zₑ, the ratio will be >1. If the proposed credit cost C_{c} is slightly smaller than the income margin estimate Zₑ, the ratio will be slightly lower than 1. The threshold could thus be set to any level where the margin of error is considered to be too low, such as e.g. 0.9, 0.8 or 0.5. In this case, if the ratio exceeds this threshold, the system determines that there is a need for verifying the income margin estimate Zₑ.

The verification need Vₑ may be beyond the predetermined threshold by exceeding it or by falling below it, depending on how the verification need Vₑ is calculated. If ratios are used, it is of course possible to instead calculate the verification need by dividing the income margin estimate Zₑ with the proposed credit cost C_{c}. In this case, there is a need for verifying the income margin estimate Zₑ if the verification need Vₑ is lower than e.g. 1.1, 1.2 or 1.5. The verification need may of course also be determined in other ways based on a comparison between the income margin estimate Zₑ and the proposed credit cost C_{c}, such as by subtracting one from the other.

If the verification need Vₑ is determined to be beyond a predetermined threshold, step S303 further comprises requesting income margin verification input from the user. This is done using financial statements to be confirmed or rejected by the user. The financial statements may be formulated as statements to be confirmed/rejected, or as statement questions to be answered yes/no, and they may comprise values.

Examples of financial statements in the form of statements to be confirmed/rejected may be e.g.
*"My annual salary exceeds £22,000"*
*"I confirm that I am permanently employed and that my annual salary exceeds £22,000, my monthly mortgage payment or rent is less than 30% of my monthly net income, and that I have no more than 1 dependent"*

Examples of financial statements in the form of statement questions to be answered yes/no may be e.g.
*"Are you permanently employed?"*
*"Does your annual salary exceed £22,000?"*
*"Is your monthly mortgage payment or rent less than 30% of your monthly net income?"*

In order for a financial statement to be generated, a financial statement template is first selected from a number of predetermined financial statement templates, based on the types of financial data 324 obtained. The financial statement templates may be obtained from an internal system memory, for example the memory 140. In one or more embodiments, the method comprises sending the financial data 324, or information about the financial data 324, from the processor 120 to the memory 140, and retrieving or receiving at least one financial statement template in the processor 120 based on the types of financial data 324.

If the financial data 324 does not comprise user specific income information, it may be desirable to verify the income estimate Xₑ, and in that case one or more financial statement templates aimed at verifying the income estimate Xₑ may be selected. Such financial statement templates may e.g. be in the form *"My annual salary exceeds* x" or *"Does your annual salary exceed x?".*

If the financial data 324 does not comprise user specific or in other ways reasonably reliable information regarding expenses such as mortgages, it may be desirable to verify the expense estimate Yₑ, and in that case one or more financial statement templates aimed at verifying the expense estimate Yₑ may be selected. Such financial statement templates may e.g. be in the form *"Is your monthly mortgage payment or rent less than y₁% of your monthly net income?".*

If verification of both income and expenses is desirable, it is also possible to select templates which verify both income and expenses, such as *"I confirm that I am permanently employed and that my annual salary exceeds* x, *my monthly mortgage payment or rent is less than y₁% of my monthly net income, and that I have no more than y₂ dependent".*

If the financial statement contains values, these values need to be determined. The values may of course be calculated as proper estimates, "best guesses" of the actual values, based on the obtained financial data 324. However, it is often not necessary to actually verify the real value of e.g. the annual salary of a user. Based on the calculation of the income margin estimate Zₑ, it may be enough to verify a much lower annual salary, as long as a large enough income margin estimate Zₑ can be verified. The purpose of a financial statement is to verify the affordability of the proposed credit limit Cₚ for the user, so it is not always necessary or even desirable for the value to be an accurate estimate. The values for the financial statements may thus e.g. be calculated based on the proposed credit limit Cₚ instead of based on the obtained financial data 324, or based on a combination of the proposed credit limit Cₚ and the obtained financial data 324.

The financial statement is then generated by combining the selected financial statement template with the calculated at least one value.

Step S303 thus corresponds to steps S250-S260 of figure 2.

Step S304 comprises verifying the income margin. This is done by presenting the financial statements to the user and requesting that the user either confirms or rejects them. In embodiments, the user may also be presented with the possibility of amending the statements before confirming or rejecting them.

The at least one financial statement 330 is in one or more embodiments presented to the user 300, as indicated by the arrow from step S304 towards the user 300 in the figure, and income margin verification input is requested from the user. Step S304 thus corresponds to steps S270 and S280 of figure 2, and optionally also to steps S285 and S290, as described below.

In one or more embodiments, step S304 optionally further comprises receiving income margin verification input in the form of an input signal 340 from the user 300 via with the user device 130. The input signal 340 indicates either confirmation, rejection or amendment of the presented financial statement 330.

In one or more embodiments, step S304 optionally further comprises updating the income margin estimate Zₑ, based on the input signal, to an updated income margin estimate Zᵤ, by updating the income estimate Xₑ to an updated income estimate Xᵤ, updating the expense estimate Yₑ to an updated expense estimate Yᵤ, and updating the income margin estimate Zₑ to an updated income margin estimate Zᵤ, where Zᵤ = Xᵤ - Yᵤ.

In one or more embodiments, step S304 optionally further comprises that if the input signal indicates that the user verifies all financial statements presented for income verification, the income estimate Xᵤ is confirmed to a verified income estimate Xᵥ, and if the input signal indicates that the user confirms all financial statements presented for expense verification, the expense estimate Yᵤ is confirmed to a verified expense estimate Yᵥ. However, if the input signal indicates that the user rejects some statements, or elects to amend the values in some statements, the income estimate Xᵤ may be updated so that it differs from the income estimate Xₑ, and/or the expense estimate Yᵤ may be updated so that it differs from the expense estimate Yₑ. No verified income/expense estimates will normally be determined based on rejected statements, but if the user elects to amend values, verified income/expense estimates may be based on statements which the user has amended and then confirmed. In this case, step S304 optionally further comprises determining the updated income estimate Xᵤ and/or the updated expense estimate Yᵤ based on the amended values.

In one or more embodiments, step S304 optionally further comprises that when both a verified income estimate Xᵥ and a verified expense estimate Yᵥ have been determined, a verified income margin Zᵥ is determined as the difference between the verified income estimate Xᵥ and the verified expense estimate Yᵥ, so that Zᵥ = Xᵥ - Yᵥ.

In one or more embodiments, step S304 optionally further comprises that if either a verified income estimate Xᵥ or a verified expense estimate Yᵥ cannot be determined, e.g. because the user has rejected statements, an updated verification need Vᵤ is determined based on the updated income margin estimate Zᵤ. In this case, further income margin verification input may be requested from the user and the estimates may be updated based on this input until a verified income margin Zᵥ can be determined. The requesting of further income margin verification input from the user may be done by generating at least one new financial statement to be confirmed or rejected by the user, as illustrated by the dotted line from step S304 back to step S302 in figure 3. The new financial statement may be generated with another value, and/or using another financial statement template.

In one or more embodiments, an optional step S305 comprises determining whether the verified income margin Zᵥ exceeds the proposed credit cost C_{c} with at least a predetermined buffer amount B, when a verified income margin Zᵥ has been determined. The proposed credit limit Cₚ may then be approved to an approved credit limit Cₐ if the verified income margin Zᵥ exceeds the proposed credit cost C_{c} with at least the predetermined buffer amount B, and rejected if the verified income margin Zᵥ does not exceed the proposed credit cost C_{c} with at least the predetermined buffer amount B. The predetermined buffer amount B may be any amount considered necessary to ensure that the user has an economical buffer, but may also be set to 0 if the user is not considered to need any economical buffer, e.g. due to the user's assets. Information about the user's assets may thus be used for determining the predetermined buffer amount B.

In one or more embodiments, step S305 further comprises calculating an updated proposed credit cost Cᵤ which the verified income margin Zᵥ exceeds by at least a predetermined buffer amount B, and based on this updated proposed credit cost Cᵤ calculate a new proposed credit limit Cₚ.

The proposed credit limit Cₚ may be approved to an approved credit limit Cₐ if the above described conditions for approval have been met.

The processor 120 may be configured to perform any or all of the method embodiments of steps S301 to S305.

### Further embodiments

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure. Accordingly, the scope of the invention is defined only by the claims.

Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the claimed scope of the present disclosure. Where applicable, the various hardware components and/or software components set forth herein can be separated into sub-components comprising software, hardware, or both without departing from the claimed scope of the present disclosure. In addition, where applicable, it is contemplated that software components can be implemented as hardware components, and vice-versa. The method steps of one or more embodiments described herein may be performed automatically, by any suitable processing unit, or one or more steps may be performed manually. Where applicable, the ordering of various steps described herein can be changed, combined into composite steps, and/or separated into sub-steps to provide features described herein.

Software in accordance with the present disclosure, such as program code and/or data, can be stored in non-transitory form on one or more machine-readable mediums. It is also contemplated that software identified herein can be implemented using one or more general purpose or specific purpose computers and/or computer systems, networked and/or otherwise.

In one or more embodiments, there is provided a non-transitory machine-readable medium on which is stored machine-readable code which, when executed by a processor, controls the processor arrangement to perform the method of any or all of the method embodiments presented herein. In different embodiments, the processor may be the processor 120 described herein, or another suitable processing unit integrated in, connected to, or external to the system 100.

## Claims

1. A computer implemented method of determining an income margin for a user of an online transaction system comprising a user device (130) and a processor (120), the method being performed by said processor (120) and comprising:
obtaining user identifying data and determining a unique user identifier identifying said user based on said obtained user identifying data;
obtaining financial data about said user by:
sending said unique user identifier to at least one data source (110), wherein said at least one data source (110) comprises at least one internal data source and/or at least one external data source; and
receiving financial data related to said user from said at least one data source (110) based on said unique user identifier;
determining an income estimate Xₑ and an expense estimate Yₑ for said user, based on said obtained financial data;
determining an income margin estimate Zₑ as the difference between said income estimate Xₑ and said expense estimate Yₑ, so that Zₑ = Xₑ - Yₑ;
obtaining a proposed credit limit Cₚ for said user;
calculating a proposed credit cost C_{c} based on said proposed credit limit Cₚ;
determining a verification need Vₑ based on a comparison between said income margin estimate Zₑ and said proposed credit cost C_{c}, and, if said verification need Vₑ is beyond a predetermined threshold, requesting income margin verification input from said user by:
selecting at least one financial statement template from a number of predetermined financial statement templates;
calculating at least one value for said financial statement template;
generating at least one financial statement by combining said selected financial statement template with said calculated at least one value;
presenting to said user, via said user device (130), said at least one financial statement; and
requesting, via said user device (130), income margin verification input from said user.

2. The method according to claim 1, further comprising:
said user device (130) receiving income margin verification input from said user, and transferring this income margin verification input to said processor (120) in the form of an input signal, wherein said input signal indicates either confirmation, rejection or amendment of said presented financial statement; and
said processor (120) updating said income margin estimate Zₑ, based on said input signal, to an updated income margin estimate Zᵤ, by:
updating said income estimate Xₑ to an updated income estimate Xᵤ;
updating said expense estimate Yₑ to an updated expense estimate Yᵤ;
updating said income margin estimate Zₑ to an updated income margin estimate Zᵤ, where Zᵤ = Xᵤ - Yᵤ.

3. The method according to claim 2, further comprising said processor (120) verifying said updated income margin estimate Zᵤ by:
determining whether said input signal confirms said updated income estimate Xᵤ to a verified income estimate Xᵥ;
determining whether said input signal confirms said updated expense estimate Yᵤ to a verified expense estimate Yᵥ;
if both a verified income estimate Xᵥ and a verified expense estimate Yᵥ can be determined, determining a verified income margin Zᵥ as the difference between said verified income estimate Xᵥ and said verified expense estimate Yᵥ, so that Zᵥ = Xᵥ - Yᵥ; and
if either a verified income estimate Xᵥ or a verified expense estimate Yᵥ cannot be determined, determining an updated verification need Vᵤ based on said updated income margin estimate Zᵤ, requesting further income margin verification input from said user, and updating said estimates based on said further income margin verification input until a verified income margin Zᵥ can be determined.

4. The method according to claim 3, further comprising said processor (120) approving or rejecting said proposed credit limit Cₚ by determining whether said verified income margin Zᵥ exceeds said proposed credit cost C_{c} with at least a predetermined buffer amount B, and:
approving said proposed credit limit Cₚ if said verified income margin Zᵥ exceeds said proposed credit cost C_{c} with at least said predetermined buffer amount B; and
rejecting said proposed credit limit Cₚ if said verified income margin Zᵥ does not exceed said proposed credit cost C_{c} with at least said predetermined buffer amount B.

5. The method according to claim 4, further comprising said processor (120) calculating an updated proposed credit cost Cᵤ, which said verified income margin Zᵥ exceeds by at least said predetermined buffer amount B, and calculating a new proposed credit limit Cₚ based on said updated proposed credit cost Cᵤ.

6. The method according to any one of the preceding claims, wherein said proposed credit limit Cₚ is obtained by being calculated by said processor (120) based on the amount of money required for a transaction requested by said user via said user device (130).

7. The method according to any one of the preceding claims, wherein said proposed credit limit Cₚ is obtained by being calculated by said processor (120) based on said determined income margin estimate Zₑ.

8. A system (100) for determining an income margin for a user of an online transaction system, the system (100) comprising a user device (130) and a processor (120), communicatively coupled to said user device (130) and to at least one data source (110), wherein said at least one data source (110) comprises at least one internal data source and/or at least one external data source, said processor (120) being configured to:
obtain user identifying data and determine a unique user identifier identifying said user based on said obtained user identifying data;
obtain financial data about said user by:
sending said unique user identifier to said at least one data source (110); and
receiving financial data related to said user from said at least one data source (110) based on said unique user identifier;
determine an income estimate Xₑ and an expense estimate Yₑ for said user, based on said obtained financial data;
determine an income margin estimate Zₑ as the difference between said income estimate Xₑ and said expense estimate Yₑ, so that Zₑ = Xₑ - Yₑ;
obtain a proposed credit limit Cₚ for said user;
calculate a proposed credit cost C_{c} based on said proposed credit limit Cₚ;
determine a verification need Vₑ based on a comparison between said income margin estimate Zₑ and said proposed credit cost C_{c}, and, if said verification need Vₑ is beyond a predetermined threshold, requesting income margin verification input from said user by:
selecting at least one financial statement template from a number of predetermined financial statement templates;
calculating at least one value for said financial statement template;
generating at least one financial statement by combining said selected financial statement template with said calculated at least one value;
presenting said at least one financial statement to said user, via said user device (130); and
requesting income margin verification input from said user, via said user device (130).

9. The system according to claim 8, wherein:
said user device (130) is configured to receive income margin verification input from said user, and to transfer this income margin verification input to said processor (120) in the form of an input signal, wherein said input signal indicates either confirmation, rejection or amendment of said presented financial statement; and
said processor (120) is configured to update said income margin estimate Zₑ, based on said input signal, to an updated income margin estimate Zᵤ, by:
updating said income estimate Xₑ to an updated income estimate Xᵤ;
updating said expense estimate Yₑ to an updated expense estimate Yᵤ;
updating said income margin estimate Zₑ to an updated income margin estimate Zᵤ, where Zᵤ = Xᵤ - Yᵤ.

10. The system according to claim 9, wherein said processor (120) is further configured to verify said income margin estimate Zᵤ by:
determining whether said input signal confirms said updated income estimate Xᵤ to a verified income estimate Xᵥ;
determining whether said input signal confirms said updated expense estimate Yᵤ to a verified expense estimate Yᵥ;
if both a verified income estimate Xᵥ and a verified expense estimate Yᵥ can be determined, determining a verified income margin Zᵥ as the difference between said verified income estimate Xᵥ and said verified expense estimate Yᵥ, so that Zᵥ = Xᵥ - Yᵥ; and
if either a verified income estimate Xᵥ or a verified expense estimate Yᵥ cannot be determined, determining an updated verification need Vᵤ based on said updated income margin estimate Zᵤ, requesting further income margin verification input from said user, and updating said estimates based on said further income margin verification input until a verified income margin Zᵥ can be determined.

11. The system according to claim 10, wherein said processor (120) is further configured to approve or reject said proposed credit limit Cₚ by determining whether said verified income margin Zᵥ exceeds said proposed credit cost C_{c} with at least a predetermined buffer amount B, wherein:
said proposed credit limit Cₚ is approved if said verified income margin Zᵥ exceeds said proposed credit cost C_{c} with at least said predetermined buffer amount B; and
said proposed credit limit Cₚ is rejected if said verified income margin Zᵥ does not exceed said proposed credit cost C_{c} with at least said predetermined buffer amount B.

12. The system according to claim 11, wherein said processor (120) is further configured to calculate an updated proposed credit cost Cᵤ, which said verified income margin Zᵥ exceeds by at least said predetermined buffer amount B, and calculate a new proposed credit limit Cₚ based on the updated proposed credit cost Cᵤ.

13. The system according to any one of the preceding claims, wherein said processor (120) is further configured to obtain said proposed credit limit Cₚ by calculating it based on the amount of money required for a transaction requested by said user via said user device (130).

14. The system according to any one of the preceding claims, wherein said processor (120) is further configured to obtain said proposed credit limit Cₚ by calculating it based on said determined income margin estimate Zₑ.

15. A non-transitory machine-readable medium on which is stored machine-readable code which, when executed by a processor 120, controls said processor 120 to perform the method steps of any one of claims 1-7.
